# EUROPEAN PATENT APPLICATION

(11) **EP 2 048 447 A2**
(43) Date of publication of application: **15.04.2009**
(21) Application number: 08252936.3
(22) Date of filing: 04.09.2008
(51) Int. Cl.: F24D 3/16, F24D 3/14

(54) **A panel**

(30) Priority: 07.09.2007 GB 0717444; 05.06.2008 GB 0810320
(71) Applicant: Polypipe Building Products Ltd., Edlington, Doncaster, Yorkshire DN12 1ES (GB)
(72) Inventor: Beever, Andrew, Huddersfield HD4 6XN (GB); Juggins, Simon, Doncaster DN5 8TT (GB)
(74) Representative: Johnson, Terence Leslie

(57) **Abstract**

The invention relates to a panel (1) for use for condition ambient air in a room of a building, characterised by a body (2), by a plurality of grooves (3) in a major surface (4) of the body (2) and by a pipe (6) adapted to carry conditioning fluid being mounted via respective portions (7) of the pipe in the grooves (3) so that at return positions (8) of the pipe adjacent pipe portions cross-over. The cross-over at the returns (8) may be externally of the panel (1) as shown, or be situated entirely within the boundary of the panel (1). In either case, the return portions (8) of the pipe lie in different planes i.e. in planes inclined to the surface (4), which in use is substantially horizontal. This cross-over provides for a neat and effective pipe return with the pipe runs being fitted closely together in the surface (4).

In a further embodiment there are indicia in the surface opposite the surface containing the grooves in order to provide for an indication as to where the grooves and hence pipe runs are located so that the panels can be secured in place from below by screws, nails or the like without risk of puncturing the pipe.

## Description

The invention relates to a panel, particularly to a panel which is used in systems for heating and/or cooling a room or rooms of a building.

Current practice in new-build applications is to install under floor heating (UFH) on the ground floor, usually with pipes screeded into a solid floor. It is still common practice to install radiators on the upper floor because of issues such as access to wiring which could be an issue if, say, the wiring for lighting on the ground floor was covered with UFH panels or insulations such that future access to extend wiring etc. would be virtually impossible.

Experience has shown however that, particularly in houses with UFH installed on the ground floor, radiators are often turned off in upstairs rooms, unless it is very cold outside, as sufficient heat is transmitted to upstairs rooms to maintain a reasonable temperature either by convection via staircases or conduction/radiation via the ground-floor ceiling and the floor on the upper floors. In principle, this also applies if the ground floor is heated by other means, e.g. radiators.

Radiators are expensive items *per se*, cost time and money to install, and usually take up wall space which cannot therefore be used for other purposes.

An object of the invention is therefore to seek to obviate the need for radiators, particularly in an upper room such as a bedroom of a building such as a house.

According to a first aspect of the invention there is provided a panel for use for condition ambient air in a room of a building, characterised by a body, by a plurality of grooves in a major surface of the body and by a pipe adapted to carry conditioning fluid being mounted via respective portions of the pipe in the grooves so that at return positions of the pipe adjacent pipe portions cross-over.

Using the invention it is possible to provide that upper floor rooms, such as bedrooms of a house can be heated from a conventional ground floor heating system.

The body may comprise an insulating material which itself may comprise a foam material such as for example a polyurethane foam, expanded polystyrene or XPS.

This provides a relatively simple yet efficient heat insulator.

A heat transfer medium may be incorporated at or on the said surface. This provides for heating ambient air by conduction and/or convection particularly when the medium may comprise a metal plate or skin such as an aluminium heat spreader plate.

The heat spreader plate may have a greater lateral extent at one or both sides than that of the body of the panel.

This provides for "hanging" of a panel on a joist.

The panel may also comprise a surface metal layer, and the grooves may be formed by routing or milling through the layer into the body. This provides a suitable and effective way to form the grooves.

The medium may comprise the layer outside the grooves and an additional metal layer in each of the grooves. Preferably the additional metal layer may comprise a metal foil.

For effective location of the metal foil, it may be secured in place by an interference fit in the respective groove, or alternatively, the metal foil may be secured in place in the respective groove by adhesive.

The medium may comprise the metal layer and a heat conductive paint or paste in each groove.

A surface of the body directed in use away from the room interior may comprise means to obviate heat loss, said means preferably comprising a metal foil, such as an aluminium foil. Thus the said surface may in use be a lower surface of the panel.

The cross-over of the pipe portions may be inboard of the lateral extent or boundary of the body. Alternatively, the cross-over of the pipe portions may extend beyond the lateral extent or boundary of the body.

Both constructions allow the pipe portions to be fitted very closely together whereby to achieve a high heat output from a small panel area.

The panel may comprise a floor panel, a ceiling panel or a wall panel of a room of a building.

In a preferred embodiment, the grooves may be substantially parallel over part of the body, and may have curved parts which cross-over to provide for cross-over of the pipe portions.

There may be six grooves, or four grooves in the latter of which two inner grooves may be connected by a part-circular grooved configuration.

The body may suitably comprise extruded polystyrene foam. In this case, there may be a metal layer laid over the body, the metal layer suitably comprising an aluminium foil, which in a preferred embodiment may comprise a self-adhesive foil. This provides for ease of the application to the body. In another embodiment the foil may also line the inside of the grooves so the pipe is in close contact therewith, the foil following the continuously complete profile of the top of the body in use.

As previously described, the body may comprise a panel, and may comprise at a major surface opposite from the grooves, indicia indicating the positions of the grooves. This allows for securing of the panel to a joist etc. of a floor, wall or ceiling from below using securing means such as screws or nails with large diameter washers or heads. The indicia thus assists in avoiding puncturing of the pipe means by the securing means, so obviating leaks, but ensuring that the securing means is not aligned with a groove and hence a pipe therein.

The body may alternatively comprise a plurality of spaced struts each comprising a groove or grooves.

The pipe may be carrying a fluid adapted to be heated by surrounding medium, and may provide a geothermal device.

According to a second aspect of the invention there is provided a floor, wall or ceiling of a room of a building, incorporating a panel as hereinbefore defined.

According to a third aspect, the invention provides a floor, wall or ceiling of a room of a building, comprising spaced apart joists or battens, a panel as hereinbefore defined being mounted between adjacent joists or batteries.

The panel may be mounted by an interference fit.

The greater lateral extent of the heat spreader plate may comprise a projection which is supported by an associated joist or batten to mount the panel.

The joists or battens may have supports secured thereto on which the panel is mounted.

Alternatively, there may be means secured to an ambient air side surface of the joists or battens for mounting the panel, which may comprise a Z-configuration profile element.

There may be means on the panel adapted to maintain the pipe in the grooves, which means may comprise a self-adhesive foil extending across the width of the panel over the pipes at each end of the panel.

The panel may include a concertina-like construction.

The said construction may be provided by forming slots along the length of the body.

According to a yet further aspect of the invention, there is provided a building, comprising a temperature system including a panel as hereinbefore defined or a floor, wall or ceiling as hereinbefore defined.

There may also be provided a geothermal system, comprising a device as hereinbefore defined adapted to be installed in the ground.

The device may be installed in a trench in the ground, suitably in an inclined position in the trench. This allows for longer pipe lengths for an optimum depth of trench.

Panels embodying the invention are hereinafter described, by way of example, with reference to the accompanying schematic drawings.
Fig. 1 is a plan view of a panel according to the invention;
Fig. 2 is to a larger scale a part sectional view of an end of the panel of Fig. 1 supported in position between joists of a floor;
Figs. 3 and 4 are part sectional views of further ways of supporting a panel according to the invention between joists of a floor;
Figs. 5, 5A. 5B and 5C show respectively and schematically a top plan view, end elevational view, bottom plan view and pipe return groove details of a second embodiment of a panel according to the invention having five pipe return grooves;
Figs. 6, 6A, 6B and 6C, show views similar to those of Figs. 5-5C, but for a third embodiment of panel with two curved pipe return details;
Fig. 7 shows schematically a plan view of apparatus according to the invention for a geothermal application;
Fig. 8 shows schematically an installation for a geothermal application; and
Fig. 9 shows a schematic view of an installation of apparatus in the ground for a geothermal application.

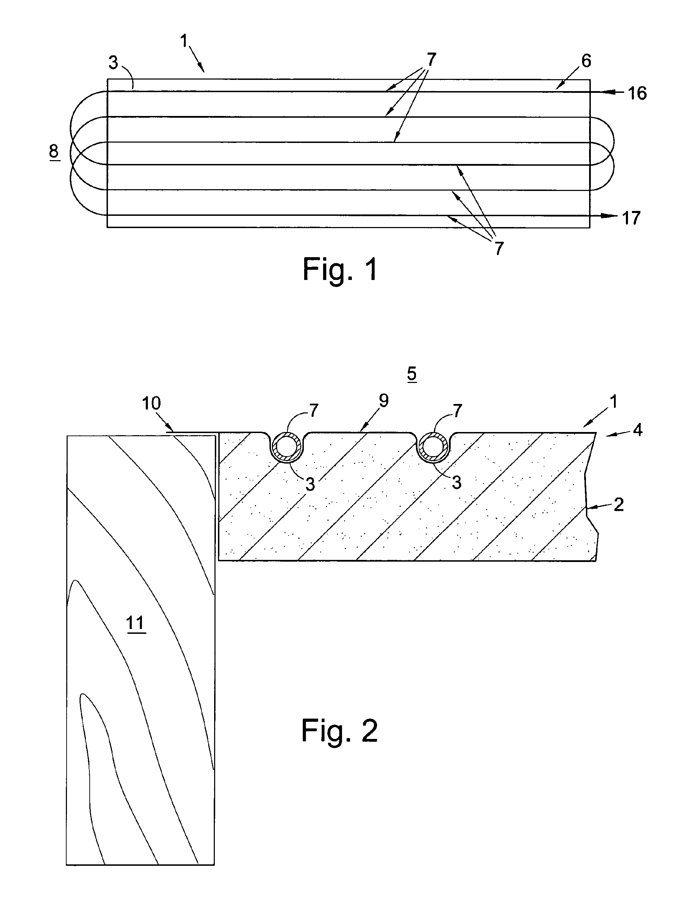

Referring to Figs. 1 to 4 of the drawings there is shown a panel 1 for use for conditioning ambient air in a room of a building, comprising a body 2 with a plurality of grooves 3 in a surface 4 directed in use towards the interior 5 of the room, a pipe 6 adapted to carry conditioning fluid being mounted via respective portions 7 of the pipe in the grooves 3 so that at return positions 8 of the pipe 6 adjacent pipe portions 7 cross-over.

Thus the return portions 8 effectively lie in different planes, i.e. in planes inclined to the said surface 4, which is in use substantially horizontal.

It will also be understood that the tem "conditioning" used herein relates to heating or cooling of ambient air in the room 5.

In the embodiment shown in the Figs. the panel 1 comprises a body 2 of foam material such as in the embodiments, polyurethane foam.

The upper, as viewed, substantially planar surface 4 of the panel has spaced apart substantially parallel grooves 3.

The pipe 6 is a flexible pipe for carrying a conditioning fluid, i.e. hot (warm) or cold water mounted in the panel 1 via the pipe portions 7 in a respective groove, the pipe portions extending laterally beyond an end of the panel and being bent (owing to the flexible nature of the pipe) to enter a groove which is not immediately adjacent the groove from which it projects. In the embodiment, the pipe re-enters a groove which is three "down" from the groove, as can be seen in Fig. 1.

The pipe return portions 8 or curves lie, as stated above, in a plane which is inclined with respect to the surface of the body, in order to provide the overlap, as opposed to lying in the same plane. This overlap allows the pipe portions 7 to be fitted closely together, so that a relatively high heat output from a small panel area can be achieved. (It will be understood that his overlapping arrangement can be applied to other under floor heating systems such as Overlay ™ and floating floor panels).

The upper 4 as viewed surface of the body has means to provide relatively even dissipation of heat in the form of a metallic element such as in the embodiment an aluminium heat spreader plate 9, which also has depressions complementary to the shape of the grooves 3 to be received therein and below the pipe portions 7.

In the embodiments shown, the heat spreader plate 9 extends beyond the lateral extent of the body 2 so as to form a projection 10 at each side which can overlap a joist 11 and be supported thereby whereby to support the panel 1 between adjacent joists.

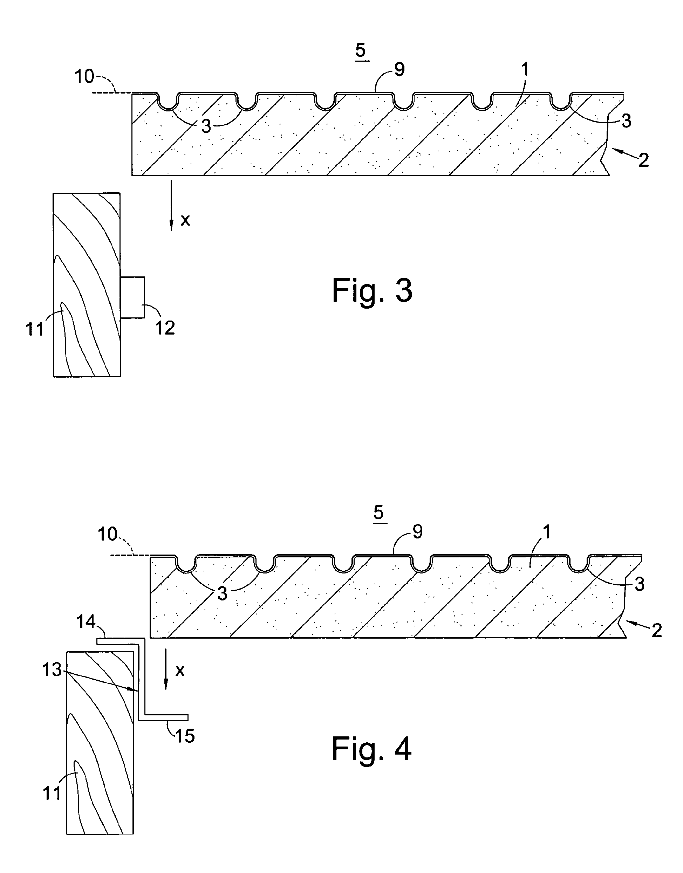

In Figs. 3 and 4 the projection 10 is shown in dashed lines to indicate that it is an optional feature. Where it is omitted, the panel 1 may be an interference fit between adjacent joists 11, or the panel 1 may be supported on studs or laths 12 secured as by nails to the joists 11 (Fig. 3) so that when the panel is inserted between the joists in the direction of the arrow 'X', the lower (as viewed) surface of the panel 1 rests on the stud 12 and the panel is supported thereby. A further support 13 is shown in Fig. 4, which is a hanger, suitably of metal, of Z-shape in end elevation, one limb 14 of which is supported by the joist 11 and the opposite limb 15 of which provides a support for the panel 1, as described with respect to the Fig. 3 embodiment, i.e. on insertion between the joists in the direction of arrow 'X'.

The panels shown and described with reference to the accompanying drawings are used for heating of an upper room 5 of a building. The panels in use fit below the floor covering in upper floor rooms, usually at the edges of the room. The panels 1 provide the additional heat output necessary to give the stipulated design temperatures in the upper floor rooms and to provide temperature control, if required. The panels thus provide additional heating to increase the temperature achieved with convection and radiation from the heating on the ground floor to the required design temperature on the upper floors.

A typical heating panel would be 2m x 0.5mm in plan dimensions and one or more of these panels could be fitted near to the edge of an upper floor room to make up the additional heat output required by these rooms.

It will be understood that the panels only take up a relatively small proportion of the total floor area and consequently access to electrical cables (e.g. for downstairs lighting) is still possible at the centre of the room or near the walls where there are no panels. If necessary, a narrow width could be left between the heating unit and the wall to give access to any cables in the wall (e.g. power sockets).

The width of the panel is designed as described above to fit between joists at standard centres. For example, 550mm width to fit between joists installed at 600mm centres. The length would be chosen to give the required heat output, e.g. 2m also as mentioned above.

The body would generally be about 25mm in thickness, but any thickness which gives the necessary structural and thermal properties can be used.

The flexible hot water pipe is of relatively small diameter, typically 10mm and is made of any suitable material such as polybutylene, PEX, PP, PE-RT of metal/plastic composite: MCP. The cross-over or overlap 8 described above is such as to provide acceptable bend radii when the pipe 6 is bent back through 180° to pass back through the grooves 3 in the panel 1, to provide water flow from inlet 16 to outlet 17. Moreover, the cross-over 8 of the pipe portions are contained below the floor surface.

It will be understood too that depending upon the thickness of the insulation panel and the depth of the grooves at the ends of the panel, additional reinforcement may be required on the end faces to resist the force created from the reaction from the overlapping turns 8 of pipe 6 when a floor covering is fixed on top of them. For example, this reinforcement could be a plastic moulding shaped to the end profile of the panel, including the pipe channels, which is bonded to the each end of the panel.

In a modification (not shown) panels could be constructed so that the end returns crossovers or overlaps 8 are incorporated within the length of the panels 1 i.e. entirely within the boundary or surface area of the panel rather than projecting beyond the ends as shown in Fig. 1.

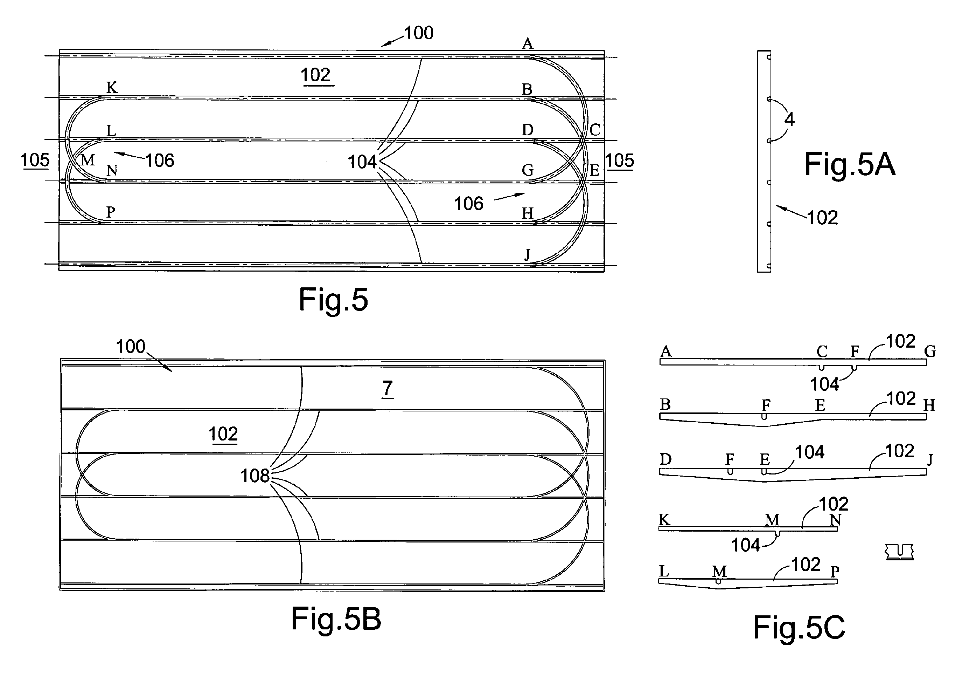

Referring now to Figs. 5 - 7 of to the drawings, there is shown apparatus 100, 110 for heating or cooling in the embodiment a space such as a room (or rooms) of a building, comprising a panel having a body 102, 103 having a plurality of grooves 104 and a pipe for carrying a fluid supported in the grooves 102, 103, the arrangement being such that at a return part 105 of the body 102, 103 adjacent pipe portions (not shown) overlap.

In the embodiment of Figs. 5 to 5C, the body 102 is in the form of a panel of expanded polystyrene (EPS) which is elongate and has essentially six grooves 104 as considered from top to bottom as viewed of the panel in Fig. 5, thereby providing five curved pipe return grooves 106, three to the right and two to the left, as viewed, the returns 106 being within the surface area of the panel 100. In Fig. 5C, the grooves are drawn as if opened out straight and showing varying groove depth at different intermediate points, the letters at each groove e.g. C, F in Fig. 5C matching the letter C, F in Fig. 5.

The grooves 104 are in the upper in use surface of the panel body 102. At the opposite (lower in use) surface 107 of the panel 102 there is indicia 108 in the form of witness lines which are vertically below respective grooves 104 in the upper surface, being on identical centre lines. These witness lines 108 thus indicate the positions of the grooves 104, and hence pipe runs in use, so that the panel can be secured in position from below using screws or nails with large washers or heads so that such fixing means do not engage, and puncture, a pipe in use.

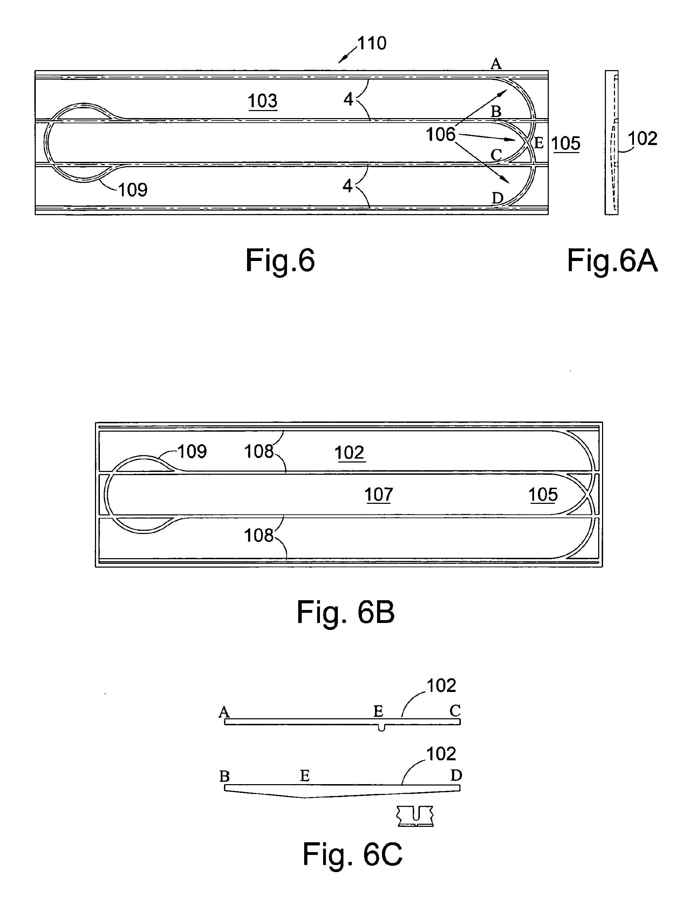

Figs. 6 to 6C show a third embodiment 110 similar to that of Figs. 5 to 5C, except that in this third embodiment 110, there are four grooves 104 comprising two curved pipe return grooves 105, the inner two grooves at the left hand end of the panel being connected via a circular or omega-shaped groove 109 which does not vary in depth while at the right hand end 105 there are curved groove parts 106 connecting the first and third grooves as the second and fourth grooves respectively, to provide the overlap for the pipe runs. The third embodiment 110 of the panel is secured from below as in the second embodiment, and accordingly also has indicia in the form of witness lines.

In both the second and third embodiments, a layer of metal (not shown) in the form of a self-adhesive aluminium foil is laid over the whole of the upper surface of the respective panels. There is no adhesive foil in the pipe grooves, and no overhang of aluminium by which to suspend the panels from joists.

In a further embodiment (not shown), the panel may comprise extruded polystyrene foam (XPS) which is relatively lightweight, is denser and has a higher compressive strength than expanded polystyrene foam. There are grooves for piping formed during the extrusion process (or which can subsequently be formed by milling or chasing). A layer of metal is then laid over the upper surface of the panel including around the inside of the grooves. The metal thus forms a liner for the grooves.

In a preferred application, the metal is self-adhesive aluminium foil. The pipes are thus in close contact with the Aluminium foil, which follows continuously the complete profile of the top (upper) surface of panel or board.

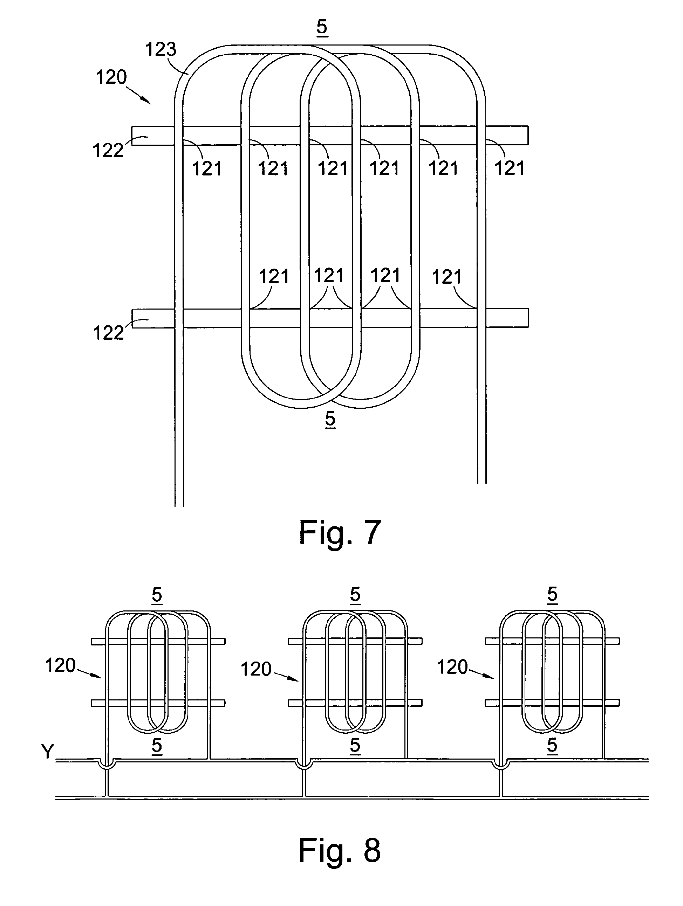

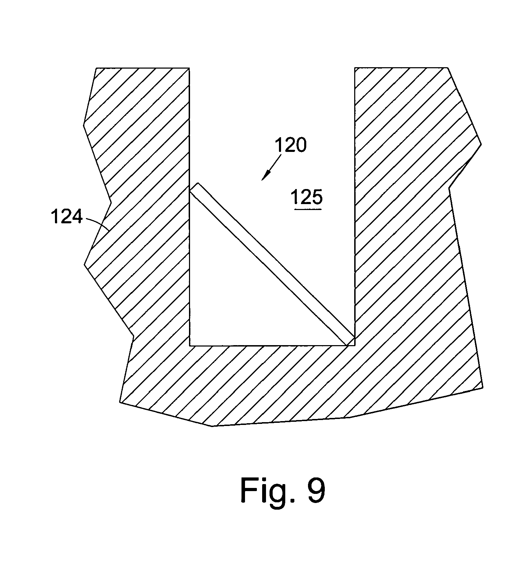

Turning now to Figs. 7 to 9, there is shown apparatus 120 in which the grooves 121 are formed in spaced support laths or struts 123, suitably of wood, and into which grooves the pipe 123, which can be a flexible plastic pipe e.g. polythene, is clipped, or engaged with a push, snap or interference fit. The pipe overlaps at the return 5. An arrangement of a plurality of apparatuses of Fig. 7 is shown in Fig. 8, fluid such as hot water flows in at X and out at Y. The apparatus 120 may be in the form of a metal pipe e.g. copper secured to a panel or struts, and located in the (warm) ground 124 (Fig. 9) to heat water flowing therethrough. The apparatus 120 may be installed in a trench 125 in the ground 124, at an angle, e.g. 45°, a vertical or substantially so, the angled installation providing longer pipe lengths and optimal trench depth for maximum heat transfer to the water. The apparatus 120 thus provides a geothermal application.

It will be understood too that:
1. One advantage of the panels disclosed described with reference to the drawings is that they could be fitted from the room below after the floor is fitted in the upper floor room and the pipe connections could be easily made.
2. An additional advantage of the panels is that they could be easily lifted out from their position within the joists if the floor cover above the panels was taken up. This would permit access to any wiring below the panels if it is not possible to design the electrical installation such that all the wiring was installed in areas outside the panel positions.
3. Part of the panel could be designed with a concertina effect by machining slots along the length of the panel to allow it to take up a greater tolerance on the distance between joists 11 if interference fitted between the joists 11 (only one of which joists is shown in the drawings).
4. The panels could be used for either wall heating or ceiling heating. The use of this type of panel could thus be advantageous in timber-framed constructions of building.
5. The pipes in the panels could be used at either typical UFH temperatures 50°C or 60°C if fed from a UFH system on the ground floor or at 80° if run as an extension of a radiator system on the ground floor.
6. The panels could also be used for cooling applications in floors, walls or ceilings.
7. In addition to their use to provide the necessary additional heat input in upper floor rooms, the panels could be used as a complete source of heating in a building. For example, in buildings which have joist constructions on both the ground and upper floors, the panels could be used on both floors as the heat source and would require less of the floors to be taken up with heating pipes because of the relatively high heat output because of the density of pipes per unit area.

## Claims

1. A panel for use for conditioning ambient air in a room of a building, **characterised by** a body, by a plurality of grooves in a major surface of the body, and by a pipe adapted to carry conditioning fluid being mounted via respective portions of the pipe in the grooves so that at return positions of the pipe adjacent pipe portions cross-over.

2. A panel according to Claim 1, **characterised by** the body comprising an insulating material.

3. A panel according to Claim 2, **characterised by** the insulating material comprising a foam material.

4. A panel according to Claim 3, **characterised by** the foam material comprising polyurethane foam, expanded polystyrene or extruded polystyrene foam (XPS).

5. A panel according to any preceding claim, **characterised by** a heat transfer medium being incorporated at or on the said surface.

6. A panel according to Claim 5, **characterised by** the medium comprising a metal plate or skin.

7. A panel according to Claim 6, **characterised by** the metal plate comprising an aluminium heat spreader plate.

8. A panel according to Claim 7, **characterised by** the heat spreader plate having a greater lateral extent at one or both sides than that of the body of the panel.

9. A panel according to Claim 5, **characterised by** the medium comprising a surface metal layer, the grooves being formed by routing or milling through the layer into the body.

10. A panel according to Claim 9, **characterised by** the medium comprising the layer outside the grooves and an additional metal layer in each of the grooves.

11. A panel according to Claim 10, **characterised by** the additional metal layer comprising a metal foil.

12. A panel according to Claim 11, **characterised by** the metal foil being secured in place by an interference fit in the respective groove.

13. A panel according to Claim 11, **characterised by** the metal foil being secured in place in the respective groove by adhesive.

14. A panel according to Claim 9, **characterised by** the medium comprising the metal layer on the body and a heat conductive paint or paste in each groove.

15. A panel according to any preceding claim, **characterised by** a surface of the body directed in use away from the room interior comprising means to obviate heat loss.

16. A panel according to Claim 15, **characterised by** the means comprising a metal foil.

17. A panel according to Claim 16, **characterised by** the metal foil comprising an Aluminium foil.

18. A panel according to any preceding claim, **characterised by** the cross-over of the pipe portions being inboard of the lateral extent of the body.

19. A panel according to any of claims 1 to 17, **characterised by** the cross-over of the pipe portions extending beyond the lateral extent of the body.

20. A panel according to any preceding claim, **characterised by** comprising a floor panel, a ceiling panel or a wall panel of a room of a building.

21. A panel according to any preceding claim, the grooves being substantially parallel over part of the body, and having curved parts which cross-over to provide for cross-over of the pipe portions.

22. A panel according to Claim 21, **characterised by** there being six grooves.

23. A panel according to Claim 22, **characterised by** there being four grooves.

24. A panel according to Claim 23, **characterised by** two inner grooves being connected by a part circular grooved configuration.

25. A panel according to Claim 24, **characterised by** comprising a metal layer laid over the body and in the grooves.

26. A panel according to Claim 25, **characterised by** the Aluminium foil comprising a self-adhesive foil.

27. A panel according to Claim 26, **characterised by** the Aluminium foil comprising a self-adhesive foil.

28. A panel according to any preceding claim, **characterised by** the body comprising at a major surface opposite the grooves, indicia indicating the positions of the grooves.

29. A panel according to a panel of any one of Claims 21 to 28 **characterised by** the body comprising a plurality of spaced struts each comprising a groove or grooves.

30. A floor, wall or ceiling of a room of a building, **characterised by** incorporating a panel according to any preceding claim.

31. A floor, wall or ceiling of a room of a building, **characterised by** comprising spaced apart joists or battens, a panel according to any preceding claim being mounted between adjacent joists or battens.

32. A floor, wall or ceiling according to Claim 31, **characterised by** the panel being mounted by an interference fit.

33. A floor, wall or ceiling according to Claim 31, when dependent on Claim 8, **characterised by** the greater lateral extent of the heat spreader plate comprising a projection which is supported by an associated joist or batten to mount the panel.

34. A floor, wall or ceiling according to Claim 31, **characterised by** the joists or battens having supports secured thereto on which the panel is mounted.

35. A floor, wall or ceiling according to Claim 31, **characterised by** including means secured to an ambient air side surface of the joists or battens for mounting the panel.

36. A floor, wall or ceiling according to Claim 35, **characterised by** the means comprising a Z-configuration profile element.

37. A floor, wall or ceiling according to any of Claims 30 to 36, **characterised by** means on the panel adapted to maintain the pipe in the grooves.

38. A floor, wall or ceiling according to Claim 37, **characterised by** the means comprising a self-adhesive foil extending across the width of the panel over the pipes at each end of the panel.

39. A floor, wall or ceiling according to any preceding claim, **characterised by** the panel including a concertina-like construction.

40. A floor, ceiling or wall according to Claim 39,**characterised by** the said construction being provided by forming slots along the length of the body.

41. A panel according to Claim 40, **characterised by** the pipe carrying a fluid adapted to be heated by surrounding medium.

42. A geothermal device **characterised by** comprising apparatus according to Claim 41.

43. A geothermal system, comprising a device according to Claim 42, **characterised by** being adapted to be installed in the ground.

44. A system according to Claim 43, **characterised by** the device being installed in a trench in the ground.

45. A system according to Claim 44, **characterised by** the device being installed in an inclined position in the trench.
